(19) Europäisches Patentamt
European Patent Office
Office européen des brevets

(11) EP 2 124 183 A2

(12) EUROPÄISCHE PATENTANMELDUNG

(43) Veröffentlichungstag:
25.11.2009 Patentblatt 2009/48

(51) Int Cl.:
*G06Q 40/00* (2006.01)

(21) Anmeldenummer: 08008788.5

(22) Anmeldetag: 09.05.2008

(84) Benannte Vertragsstaaten:
AT BE BG CH CY CZ DE DK EE ES FI FR GB GR
HR HU IE IS IT LI LT LU LV MC MT NL NO PL PT
RO SE SI SK TR
Benannte Erstreckungsstaaten:
AL BA MK RS

(71) Anmelder: SIEMENS AKTIENGESELLSCHAFT
80333 München (DE)

(72) Erfinder:
• Sutor, Ariane, Dr.
82166 Gräfelfing (DE)
• Weinmann, Andreas
8010 Graz (AT)

(54) **Verfahren und Vorrichtung zur Erhöhung der Betriebssicherheit eines Systems**

(57) Verfahren und Vorrichtung zur Erhöhung einer Betriebssicherheit eines Systems hinsichtlich eines die Betriebssicherheit beeinträchtigenden Ereignisses, wobei das Verfahren aufweist: - Bereitstellen einer Menge von Einzelrisiken, die eine vorbestimmte Menge von Schadenshöhen einnehmen, wobei die Schadenshöhen einen vorbestimmten Abstand zueinander aufweisen, wobei für jede Schadenshöhe der vorbestimmten Menge einer Wahrscheinlichkeit dafür berechnet wird, dass ein aufgrund des die Betriebssicherheit beeinträchtigenden Ereignisses eingetretener Gesamtschaden kleiner oder gleich der Schadenshöhe ist.

FIG 1

**Beschreibung**

Die vorliegende Erfindung betrifft eine Verfahren und eine Vorrichtung zur Erhöhung der Betriebssicherheit eines Systems hinsichtlich eines die Betriebssicherheit des Systems beeinträchtigenden bzw. vermindernden Ereignisses.

Technisches Risikomanagement hat zum Ziel, frühzeitig mögliche Probleme in einem Betrieb zu identifizieren und somit die Betriebssicherheit zu erhöhen. Die Risiken, die im Rahmen eines Betriebs eines Systems, beispielsweise einer Anlage oder eines Projekts vorkommen können, werden analysiert, um einerseits Rückstellungen für die zu erwartenden Kosten zu bilden, die durch die Risiken verursacht werden, und um andererseits möglichst effiziente technische Maßnahmen zur Risikosenkung ergreifen zu können.

Es gibt eine Vielzahl unterschiedlicher Ereignisse, welche in verschiedenen Bereichen, wie z.B. Anlagenbau, Kraftwerktechnik oder Medizintechnik, die Betriebssicherheit vermindern können. Betrachtet man etwa den Bau von Gasturbinen, so ist ein die Betriebssicherheit beeinträchtigendes Ereignis zum Beispiel die Situation, dass die Abmessungen der Bauteile für eine Gasturbine nicht zusammenpassen. Dadurch können beim Betrieb Vibrationen in der Gasturbine entstehen, welche große Gefahren für die jeweilige Anlage und für die Umgebung mit sich bringen können. Ein weiteres Beispiel aus dem Bereich der Transporttechnik ist das Ausfallen eines Sensors in der Tür eines Zugwagons.

Ein Risiko lässt sich als eine kalkulierte Prognose eines möglichen Schadens definieren. Ein Risiko kann als Wahrscheinlichkeit des Eintretens eines negativen Ereignisses, d.h. eines die Betriebssicherheit beeinträchtigenden Ereignisses, multipliziert mit einem Schadensparameterwert eines durch das Ereignis hervorgerufenen Schadens betrachtet werden. Ferner setzt sich ein Risiko oft aus einer Menge von Einzelrisiken zusammen, die zu dem (Gesamt-) Risiko beitragen. D.h. das Gesamtrisiko weist mehrere kleinere Faktoren bzw. Einzelrisiken auf, die jeweils ihre Eintrittswahrscheinlichkeit und ein Schadensausmaß haben.

Üblicherweise werden Einzelrisiken eines Projekts im Rahmen von Risikoworkshops ausfindig gemacht und mit einem Schadensparameterwert beispielsweise einer Schadenshöhe in Euro, und mit einer Eintrittswahrscheinlichkeit bewertet. Das Produkt aus Schadensparameterwert und Eintrittswahrscheinlichkeit wird als Risiko bezeichnet. Die Summe der (Einzel-) Risiken ergibt das Gesamtrisiko.

Da jedes Einzelrisiko nur mit einer gewissen Wahrscheinlichkeit eintritt, ist es eine "zufällige Größe". Die Höhe des Gesamtrisikos ist somit nicht deterministisch vorhersehbar.

Für bestimmte Maßnahmen, etwa das Bilden von Rückstellungen, sind Aussagen hinsichtlich eines bestehenden des Gesamtrisikos interessant. Auch für die Vorbereitung technischer Maßnahmen ist die Vorhersage bzw. Prognose eines Gesamtrisikos von Bedeutung.

In den bisher bekannten Verfahren wird in der Regel nur der Erwartungswert des Gesamtrisikos als ein Wert berechnet.

In einem bisher bekannten Verfahren, wird versucht, auch die Verteilung des Gesamtrisikos zu ermitteln. Dabei wird eine Monte-Carlo-Simulation zur Approximation der Verteilung implementiert. Durch die Monte-Carlo-Simulation wird eine hohe Anzahl von Projektdurchläufen entsprechend der einzelnen Eintrittswahrscheinlichkeiten simuliert. Der Nachteil dieses herkömmlichen Verfahrens besteht jedoch in sehr langen Rechenzeiten und somit auch in sehr langen Wartezeiten, so dass der Einsatz eines solchen Verfahrens in Risikoworkshops nicht praktikabel ist. Des Weiteren werden durch Monte-Carlo-Simulationen lediglich Abschätzungen bzw. Approximationen jedoch keine exakten Berechnungen als Ergebnis geliefert, so dass sowohl die Erfassung als auch die Analyse der Ergebnisse erschwert wird.

Der Erfindung liegt die Aufgabe zugrunde, eine verbesserte Risikoauswertung und somit ein Erhöhung der Betriebssicherheit hinsichtlich eines die Betriebssicherheit beeinträchtigenden Ereignisses zu erreichen.

Die Aufgabe wird durch ein Verfahren mit den Merkmalen des unabhängigen Anspruchs 1, durch eine Vorrichtung mit den Merkmalen des unabhängigen Anspruchs 13, durch ein Computerprogramm mit den Merkmalen des unabhängigen Anspruchs 14 oder durch einen Datenträger mit den Merkmalen des unabhängigen Anspruchs 16 gelöst.

Die Aufgabe wird mittels eines Verfahrens zur Erhöhung der Betriebssicherheit hinsichtlich eines die Betriebssicherheit beeinträchtigenden Ereignisses gelöst, wobei das Verfahren aufweist:

- Bereitstellen von einer Menge von Einzelrisiken, die eine vorbestimmte Menge von Schadenshöhen einnehmen, wobei die Schadenshöhen einen vorbestimmten Abstand zueinander aufweisen; und
- Ermitteln für jede Schadenshöhe der vorbestimmten Menge von Schadenshöhen eine Wahrscheinlichkeit dafür, dass ein aufgrund des die Betriebssicherheit beeinträchtigenden Ereignisses eingetretener Gesamtschaden kleiner oder gleich der Schadenshöhe ist.

Die vorliegende Erfindung bietet somit die Möglichkeit, festzustellen, mit welcher Wahrscheinlichkeit das Gesamtrisiko unter einem festen Wert liegt. Solche Informationen sind insbesondere für das Bilden von Rückstellungen oder für sonstige Maßnahmen, insbesondere technische Maßnahmen, wichtig. Ferner erlaubt die erfindungsgemäß ermittelte Wahrscheinlichkeitsverteilung festzustellen, welche Risiken besonders zum Anstieg der Wahrscheinlichkeit des Gesamtrisikos beitragen. Zusätzlich wird hierdurch das Einleiten von Maßnahmen nach Eintritt des die Betriebssicherheit beeinträchtigenden Ereignisses an den effektivsten Stellen ermöglicht.

Das Ermitteln der Wahrscheinlichkeit kann ein Bestimmen einer Wahrscheinlichkeitsverteilung einer Summe der Einzelrisiken umfassen. Ferner kann das Bestimmen der Wahrscheinlichkeitsverteilung der Summe der Einzelrisiken für alle Einzelrisiken durchgeführt werden.

Gemäß einer vorteilhaften Ausführungsform des vorliegenden erfindungsgemäßen Verfahrens, erfolgt ein Bestimmen einer ersten Wahrscheinlichkeitsverteilung einer ersten Summe der Einzelrisiken über die Einzelrisiken bis zu einem aktuellen Einzelrisiko basierend auf einer zweiten Summe der Einzelrisiken bis zu einem Einzelrisiko vor dem aktuellen Einzelrisiko.

Dies bietet die Möglichkeit einer induktiven bzw. iterativen Ausführung des vorliegenden erfindungsgemäßen Verfahrens, d.h. auf weitere notwendige und zur Lösung beitragende Ergebnisse wird basierend auf dem direkten vorherigen Ergebnis aufgebaut. Daher wird kein zusätzlicher Speicher und keine zusätzliche Rechenzeit benötigt, um alle vorherigen Ergebnisse zu speichern oder auszuwerten. Somit spart das erfindungsgemäße Verfahren effektiv Speicher- und Rechenkapazität.

Ferner kann das Bestimmen der ersten Wahrscheinlichkeitsverteilung ein Erstellen einer Menge von Arrays bzw. Datenfeldern für alle positiven Werte des aktuellen Einzelrisikos aufweisen, wobei jedes Datenfelder einem positiven Wert des aktuellen Einzelrisikos entspricht und wobei jedes Datenfelder eine Dimension V/M aufweist, wobei M der vorbestimmte Abstand und V ein Ergebnis einer Summe von maximalen Werten aller Einzelrisiken ist.

Dabei kann für jeden Eintrag eines Datenfeldes bzw. Arrays, der einem positiven Wert des aktuellen Einzelrisikos entspricht, eine Rechtsverschiebung durchgeführt werden. Durch das Einführen der Verschiebung in den jeweiligen Datenfeldern erfolgt ein effektives Bestimmen der Varianz hinsichtlich der möglichen Werte eines Einzelrisikos, welches zudem rechenzeit- und platzsparend ist.

Bei einer vorteilhaften Ausführungsform des vorliegenden erfindungsgemäßen Verfahrens wird eine Rechtsverschiebung um $x_{m+1,i}/M$ durchgeführt werden, wobei $x_{m+1,i}$ der positive Wert des aktuellen Einzelrisikos ist.

Dem verschobenen Eintrag kann eine erste Wahrscheinlichkeit dafür, dass die zweite Summe den positiven Wert des aktuellen Einzelrisikos als Ergebnis hat, zugewiesen werden.

Ferner kann die erste Wahrscheinlichkeitsverteilung mit einer zweiten Wahrscheinlichkeit dafür, dass das aktuelle Einzelrisiko den Wert Null aufweisen kann, multipliziert werden, wenn das aktuelle Einzelrisiko einen Wert Null aufweist.

Zusätzlich kann das erfindungsgemäße Verfahren Datenfelder für alle positiven Werte des aktuellen Einzelrisikos aufsummieren.

Gemäß einem vorteilhaften Ausführungsbeispiel der vorliegenden Erfindung wird zum Ermitteln der Wahrscheinlichkeit einer kumulativen Dichte hinsichtlich jeder Schadenshöhe der vorbestimmten Menge von Schadenshöhen berechnet.

Ferner kann gemäß einer weiteren vorteilhaften Ausführungsform des vorliegenden erfindungsgemäßen Verfahrens der Abstand als der maximale Abstand zwischen den Schadenshöhen der vorbestimmten Menge von Schadenshöhen bestimmt werden.

Wenn eine Ausgangsmenge von Risiken gegeben ist, die über eine Ausgangsmenge von Schadenshöhen definiert ist, bedeutet dies nicht, dass alle Schadenshöhen der Ausgangsmenge durch die gegebene Ausgangsmenge von Risiken gedeckt ist. Es kann sein, dass Risiken mit ähnlichen Werten gegeben sind. In einem solchen Fall, kann die Ausgangsmenge von Schadenshöhen durch Einführen des oben genannten Abstandes, auf die vorstehend definierte vorbestimmte Menge von Schadenshöhen reduziert werden. Dies erhöht die Effizienz, da weniger Schadenshöhen bei Berechnungen berücksichtigt werden müssen.

Die oben genannte Aufgabe wird ferner durch eine Vorrichtung gelöst, welche zur Erhöhung der Betriebssicherheit eines Systems hinsichtlich eines die Betriebssicherheit beeinträchtigenden Ereignisses ausgestaltet ist, wobei die Vorrichtung aufweist:

- einen Speicher zum Bereitstellen einer Menge von Einzelrisiken, die eine vorbestimmte Menge von Schadenshöhen einnehmen, wobei die Schadenshöhen einen vorbestimmten Abstand zueinander haben; und
- eine Berechnungseinheit, die für jede Schadenshöhe der vorbestimmten Menge von Schadenshöhen eine Wahrscheinlichkeit dafür, dass ein aufgrund des die Betriebssicherheit beeinträchtigenden Ereignisses eingetretener Gesamtschaden kleiner oder gleich der Schadenshöhe ist, berechnet.

Die oben genannte Aufgabe wird ferner mittels eines Computerprogramms gelöst, das eine Kodierung aufweist, die derart ausgestaltet ist, dass Schritte des Verfahrens nach einem der Ansprüche 1 bis 12 ausführbar sind. Dabei kann das Computerprogramm auf einem Datenträger gespeichert sein.

Wie bereits erläutert, wird gemäß der vorliegenden Erfindung eine effiziente d.h. speicherplatzsparende und rechenzeitsparende Erhöhung der Betriebssicherheit hinsichtlich eines die Betriebssicherheit beeinträchtigenden bzw.

schädigenden Ereignisses ermöglicht. Hierdurch können geeignete Maßnahmen, insbesondere technische Maßnahmen gezielt selektiert und vorbereitet werden. Ferner wird z.B. das Bilden von Rückstellungen unterstützt. Aus der erfindungsgemäß erstellten Wahrscheinlichkeitsverteilung des Gesamtrisikos kann ermittelt werden, welche Risiken besonders zum Anstieg der Wahrscheinlichkeit des Gesamtrisikos beitragen. Nach Auftreten eines Ereignisses wird dadurch das Einleiten von Maßnahmen an den effektivsten Stellen ermöglicht.

Wie bereits erwähnt, werden Rechenzeiten, die für das Berechnen einer Risikoverteilung eines Projekts benötigt werden, durch Anwenden der oben skizzierten und nachstehend detaillierter erläuterten Vorgehensweise gemäß der vorliegenden Erfindung deutlich vermindert. Beispielsweise kann eine Berechnung, die durch Einsatz einer Monte-Carlo-Simulation 30 Minuten benötigt, durch das vorliegende erfindungsgemäße Verfahren in wenigen Sekunden erfolgen. Die Berechnungsdauer hängt von der Größe eines Projekts ab.

Des Weiteren wird durch den analytischen Ansatz des vorliegenden erfindungsgemäßen Verfahrens eine exakte Lösung geliefert. Durch die exakte Lösung wird eine gute, glatte graphische Visualisierung und dadurch auch eine bessere und leichtere Erfassbarkeit der Ergebnisse ermöglicht. Für die Durchführung von Maßnahmen können leicht die Quantille der Verteilung abgelesen werden. An einem Anstieg der Verteilungsfunktion sind die Bereiche sichtbar, in denen einzelne Risiken besonders zum Gesamtrisiko beitragen.

Im Nachfolgenden wird das erfindungsgemäße Verfahren ausführlich anhand bevorzugter Ausführungsbeispiele unter Bezugnahme auf die beigefügten Zeichnungen beschrieben.

Es zeigen:

Fig. 1 Verfahrensschritte des Verfahrens zur Erhöhung der Betriebssicherheit hinsichtlich eines die Betriebssicherheit vermindernden Ereignisses gemäß einem vorteilhaften Ausführungsbeispiel des vorliegenden erfindungsgemäßen Verfahrens;

Fig. 2 eine Vorrichtung zum Erhöhung der Betriebssicherheit hinsichtlich eines die Betriebssicherheit vermindernden Ereignisses gemäß einem vorteilhaften Ausführungsbeispiel der vorliegenden Erfindung;

Fig. 3A eine Spezifikation von Zufallsvariablen bzw. Einzelrisiken für ein erstes Berechnungsbeispiel gemäß der vorliegenden Erfindung;

Fig. 3B eine gemäß einem Ausführungsbeispiel der vorliegenden Erfindung berechnete Wahrscheinlichkeitsverteilung des Gesamtrisikos hinsichtlich der Zufallsvariablen bzw. Einzelrisiken der Fig. 3A;

Fig. 4A eine Spezifikation von Zufallsvariablen bzw. Einzelrisiken für ein zweites Berechnungsbeispiel gemäß der vorliegenden Erfindung;

Fig. 4B eine gemäß einem Ausführungsbeispiel der vorliegenden Erfindung berechnete Wahrscheinlichkeitsverteilung des Gesamtrisikos hinsichtlich der Zufallsvariablen bzw. Einzelrisiken der Fig. 4A;

Fig. 5A eine Spezifikation von Zufallsvariablen bzw. Einzelrisiken für ein drittes Berechnungsbeispiel gemäß der vorliegenden Erfindung zeigt; und

Fig. 5B eine gemäß einem Ausführungsbeispiel der vorliegenden Erfindung berechnete Wahrscheinlichkeitsverteilung des Gesamtrisikos hinsichtlich der Zufallsvariablen bzw. Einzelrisiken der Fig. 5A.

Mit $K$ und $L$ als positive natürliche Zahlen und mit $\{X_k\}_{1 \leq k \leq K}$ als endliche Familie (oder Menge) von realen Zufallsvariablen bzw. Einzelrisiken gilt für alle $k$ im Bereich von $1 \leq k \leq K$, dass $X_k \in LN$ und $X_k$ nimmt nur endlich viele Werte bzw. Schadenshöhen einnehmen.

Es ist eine Verteilung der Zufallsvariable bzw. des Gesamtrisikos $X$, d.h. der Verteilung der Wahrscheinlichkeitsverteilung des Gesamtrisikos zu berechnen. Dabei ist das Gesamtrisiko $X$ als Summe der Einzelrisiken $X_k$ definiert:

$$X := \sum_{k=1}^{K} X_k$$

Jede Zufallsvariable bzw. jedes Einzelrisiko $X_k$ kann mindestens zwei Werte einnehmen. Selbst wenn jedes Einzelrisiko $X_k$ nur zwei Werte einnimmt, kann die Verteilungsfunktion des Gesamtrisikos $X$ $2^K$ positive Jumps bzw.

Sprünge aufweisen.

Daher können diejenigen Zufallsvariablen bzw. Einzelrisiken $X_k$ aus der Menge der Zufallsvariablen bzw. Einzelrisiken $\{X_k\}_{1 \leq k \leq K}$ hinsichtlich solcher beschränkt werden, die ähnliche Werte aufweisen.

Dafür wird eine Schrittbreite bzw. ein Abstand für Schadenshöhen auf einer Scala von Schadenshöhen wie folgt definiert bzw. bestimmt:

$$L_0 := \max\{M \in \mathrm{N} : \forall k \quad 1 \leq k \leq K \quad X_k \in M\mathrm{N}\}$$

$M$ definiert dabei eine maximale Schrittbreite bzw. einen maximalen Abstand, der immer noch alle Zufallsvariablen bzw. Einzelrisiken $X_k$ erfasst.

Eine geringe Berechnungszeit wird demnach insbesondere in den Fällen erreicht, in denen der maximale Wert, den ein Risiko, bei Rasterung durch die Schrittbreite einnehmen kann klein ist. Die Effektivität kann dabei durch die folgende Gleichung geprüft werden:

$$S := \frac{1}{L_0} \max_{1 \leq k \leq K} \max\{X(\omega) : \omega \in \Omega\}$$

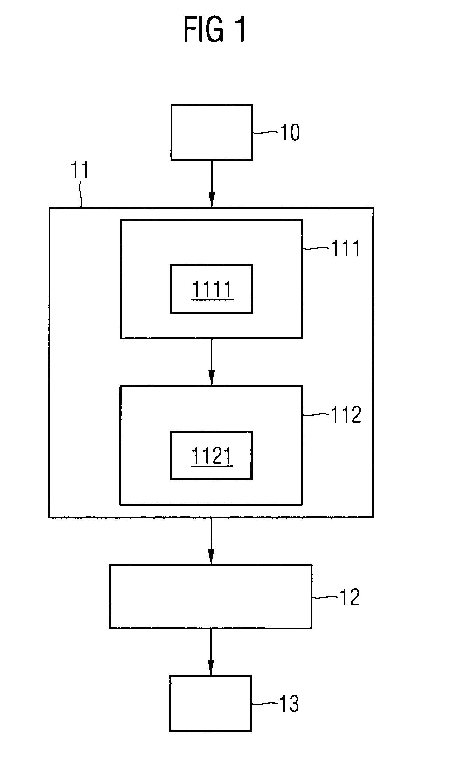

Fig. 1 zeigt Schritte des Verfahrens zur Erhöhung der Betriebssicherheit hinsichtlich eines die Betriebssicherheit vermindernden Ereignisses gemäß einem vorteilhaften Ausführungsbeispiel der vorliegenden Erfindung.

Als Eingabe 10 wird eine endliche Familie bzw. Gruppe $\{X_k\}_{1 \leq k \leq K}$ aus Zufallsvariablen bzw. Einzelrisiken $X_k$ betrachtet, wobei die Zufallsvariablen bzw. Einzelrisiken $X_k$ endliche Werte auf der Scala $M\mathrm{N}$ einnehmen, d.h. eine Menge von Einzelrisiken $\{X_k\}_{1 \leq k \leq K}$, wobei die Einzelrisiken Werte einer vorbestimmten Menge von Schadenshöhen einnehmen können und wobei die Schadenshöhen einen vorbestimmten Abstand $M$ zueinander aufweisen.

Eine Ausgabe 13 weist eine Diskkretisierung der Verteilungsfunktion des Gesamtrisikos $X$ in einem abstandsgleichen Raster auf.

$N_k$ ist die Anzahl von positiven Werten, die durch die Zufallsvariable bzw. den Einzelrisiko $X_k$ eingenommen werden können. Dabei repräsentiert die Menge $\{x_{ki}\}_{1 \leq i \leq N_k}$ die Werte selbst und $V_k$ repräsentiert den maximalen Wert von $X_k$.

$V = \sum_{k=1}^{K} V_k$ ist der maximale Schaden, der beim Eintreten eines die Betriebssicherheit eines Systems beeinträchtigenden Ereignisses entstehen kann. Gemäß einem vorteilhaften Ausführungsform des erfindungsgemäßen Verfahrens werden durch Betrachtung des maximalen Schadens $V$ die folgenden Schritte ausgeführt:

```
A = array (V/M)
A(0) = 1.0
A(1:V/M) = 0.0

for k = 1:1:K
    B = array (N_k)
    for i = 1:1:N_k
        B(i) = array(V/M)
        B(O:V/M) = 0.0
        for 1 = 1:1: (V/M)
            B(i) (1 + x_kilm) = A(1)*P(X_k = x_ki)
        endfor(l)
    endfor(i)
    for r = 1:1:(V/M)
        A(r) = A(r) * P(X_k = 0)
        for s = 1:1:N_k
            A(r) = A(r) + B(s) (r)
        endfor(s)
```

```
    endfor(r)

 for b = 2:1: (V/M)
    A(b) = A(b) + A(b-1)
 endfor(b)
```

Das Verfahren gemäß dem vorliegenden vorteilhaften Ausführungsbeispiel arbeitet induktiv, bzw. iterativ d.h., im Schritt $m$ wird auf $m+1$ geschlussfolgert.

Nach dem Schritt $m$ der Außenschleife (der k-Schleife) 11 wird die Verteilung der Summe der ersten $m$ Zufallsvariablen bzw. Einzelrisiken berechnet.

Innerhalb der gesamten ersten inneren Schleife (der i-Schleife) 111 werden für die in der k-Schleife 11 betrachtete aktuelle Zufallsvariable bzw. aktuelle Einzelrisiko $X_{m+1}$ insgesamt $N_{m+1}$ Arrays bzw. Anordnungen erstellt, wobei jedes Array bzw. Datenfeld für einen positiven Wert, den die aktuelle Zufallsvariable bzw. das aktuelle Einzelrisiko $X_{m+1}$ einnehmen kann, erstellt wird und wobei jedes Array die Dimension des Ausgabearrays $A$ aufweist, d.h., $V/M$.

Innerhalb der 1-Schleife 1111 werden die Einträge eines der Arrays B(i) durchgelaufen und behandelt. Dabei wird in jedem i-ten (d.h. aktuellen) Array (wobei $1 \leq i \leq N_{m+1}$) die Verteilung der Summe $\sum_{k=1}^{m} X_k$ durch $x_{m+1,i}/M$ nach rechts verschoben und jeder Eintrag des i-ten Arrays mit $P(X_{m+1} = x_{m+1,i})$ multipliziert. In der 1-Schleife 1111 (wird für jeden möglichen Wert von $X_{m+1}$ die Wahrscheinlichkeit $P(\sum_{k=1}^{m} X_k = l \cap X_{m+1} = x_{m+1,i})$ berechnet, d.h., Wahrscheinlichkeit dafür, dass $\sum_{k=1}^{m} X_k$ gleich $x_{m+1,i}$ sein wird. Dieser Wert wird dann in dem Eintrag $l + x_{m+1,i}/M$ des i-ten Arrays bzw. Datenfeldes gespeichert.

Nach der i-Schleife 111 folgt die r-Schleife 112, im Rahmen derer Einträge des Ergebnisarrays $A$ und der insgesamt $N_{m+1}$ Arrays des aktuellen Einzelrisikos $X_{m+1}$ mit dem Index r behandelt oder betrachtet werden. Dort wird in den Fällen, in denen $X_{m+1}$ den Wert 0 aufweisen kann, die Wahrscheinlichkeitsverteilung der Summe $\sum_{k=1}^{m} X_k$ mit $P(X_{m+1}=0)$ (d.h., mit Wahrscheinlichkeit dafür, dass $X_{m+1}=0$ sein wird) multipliziert. Dieser Wert wird im Ergebnisarray $A$ als r-ter Eintrag (r-Schleife) abgelegt bzw. gespeichert. Anschließend werden die Einträge Arrays (Ergebnisarray $A$ und die insgesamt $N_{m+1}$ Arrays des aktuellen Einzelrisikos $X_{m+1}$ ) summiert (siehe s-Schleife 1121). Auf diese Weise erhält das Ergebnisarray $A$ nach dem Ausführen der s-Schleife die Verteilung von $\sum_{k=1}^{m+1} X_k$ .

Dadurch werden für jeden möglichen Wert der Verteilung (r-Schleife) die Wahrscheinlichkeiten für $P(\sum_{k=1}^{m} X_k = l \cap X_{m+1} = 0)$ (festgehalten bzw. gespeichert innerhalb der r-Schleife 112 in $A(r)$) und die Wahrscheinlichkeiten für $P(\sum_{k=1}^{m} X_k = r - s \cap X_{m+1} = s)$ (festgehalten bzw. gespeichert innerhalb der $B(s)(r)$ in der s-Schleife 1121) summiert. Die letzte Schleife 12 (die b-Schleife) stellt dann eine kumulative Dichte-Funktion, d.h., Verteilungsdichte der Werte der Zufallsvariablen bzw. Einzelrisiken, als Ergebnis bereit.

Die Ausgabe 13 wird in dem Datenfeld bzw. Array $A$ gespeichert, wobei jeder Eintrag $A(t)$ ($1 \leq t \leq V/M$) die Wahrscheinlichkeit $P(X \leq t{*}M)$ angibt, d.h., die Wahrscheinlichkeit dafür, dass das Gesamtrisiko $X$ kleiner oder gleich dem Schaden $t{*}M$ sein wird.

Es ist anzumerken, dass in der 1-Schleife 1111 der Index l in Abhängigkeit von k und i gewählt werden kann. Dadurch wird eine Ersparnis der Rechenzeit erreicht. Ferner, ist im k-ten Schritt der Iteration der höchste Index $u$ in dem Array $A$ derart, dass $A(u) \neq 0$ kleiner oder gleich $\sum_{a=1}^{k} V_a$ ist.

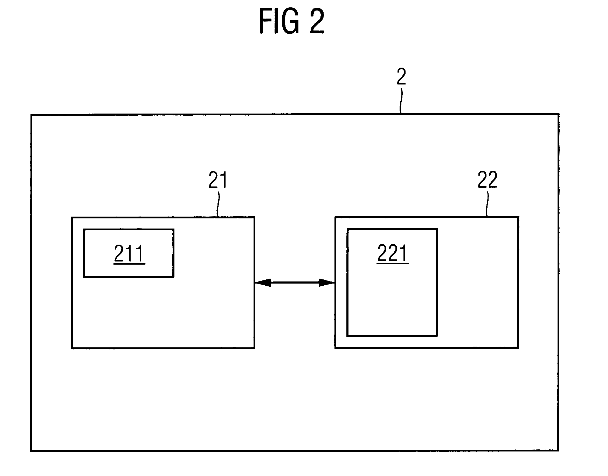

Fig. 2 zeigt eine Vorrichtung 2 zur Erhöhung der Betriebssicherheit hinsichtlich eines die Betriebssicherheit eines Systems beeinträchtigenden Ereignisses gemäß einer weiteren vorteilhaften Ausführungsform der vorliegenden Erfindung.

Die Vorrichtung 2 weist einen Speicher 21, und eine Berechnungseinheit 22, z.B. einen Prozessor, auf.

Durch den Speicher 21 werden die zur erfindungsgemäßen Berechnung notwendigen und Informationen und Daten 211 bereitgestellt. Beispielsweise können die Ausgangsdaten, wie etwa die Menge von Einzelrisiken oder die Menge von Schadenshöhen, durch den Speicher 21 als die für die erfindungsgemäße Berechnung notwendigen Daten 211 gespeichert werden. Ferner können je nach Bedarf entweder temporär oder auch dauerhaft die durch die erfindungsgemäßen Berechnungen anfallenden Daten und Parameter durch den Speicher 21 gespeichert und/oder verwaltet werden.

Durch den Prozessor 22 können die Schritte des erfindungsgemäßen Verfahrens ausgeführt und anschließend die Wahrscheinlichkeitsverteilung 221 des Gesamtrisikos bereitgestellt werden. Die Wahrscheinlichkeitsverteilung 221 kann anschließend in dem Speicher 21 abgelegt werden, um z.B. in einem späteren Schritt oder zu einem späteren Zeitpunkt visualisiert zu werden.

Dadurch, dass die Vorrichtung 2, welche zur Erhöhung der Betriebssicherheit hinsichtlich eines die Betriebssicherheit vermindernden Ereignisses ausgestaltet ist, zusätzlich die Schritte des vorstehend erläuterten Verfahrens durchführt, ermöglicht die Vorrichtung 2 eine effektive und effizientes Erhöhung der Betriebssicherheit. Dabei benötigt die Vorrichtung 2 wenig Speicherplatz. Ferner ist die benötigte Rechenzeit der Vorrichtung 2 bzw. der Berechnungseinheit 42 sehr gering. Dies hat den Vorteil, dass die Vorrichtung 2 leistungsfähiger wird und in der Lage ist, noch weitere Prozesse ohne Überlastung durchzuführen.

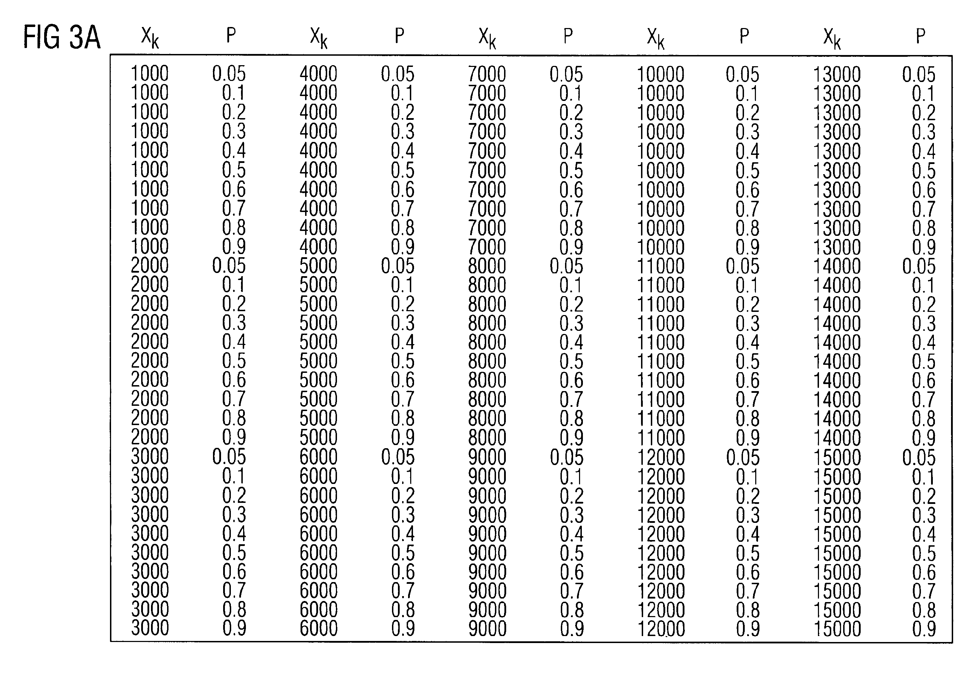

Die Figuren 3A bis 5B zeigen Beispiele für Berechnungen gemäß dem erfindungsgemäßen Verfahren. Um die Darstellung zu vereinfachen, können die Zufallsvariablen bzw. die Einzelrisiken zwei Werte einnehmen, wobei ein Wert stets Null ist. Aus diesem Grund sind die Wahrscheinlichkeiten nur für die positiven Werte angegeben. Die Wahrscheinlichkeit für den Nullwert lässt sich leicht aus der Wahrscheinlichkeit des positiven Wertes ableiten und beträgt: 1 - Wahrscheinlichkeit des positiven Wertes.

Die Eingabedaten (die Werte der Zufallsvariablen bzw. der Einzelrisiken $X_k$ und die entsprechenden Wahrscheinlichkeiten P) werden im Nachfolgenden in Tabellenform präsentiert. Die Ergebnisse werden mittels einer durch das Excel-Programm generierten Grafik dargestellt. Dabei werden auf der horizontalen Achse die Schadenshöhen und auf der vertikalen Achse Wahrscheinlichkeiten für die Schadenshöhen abgebildet

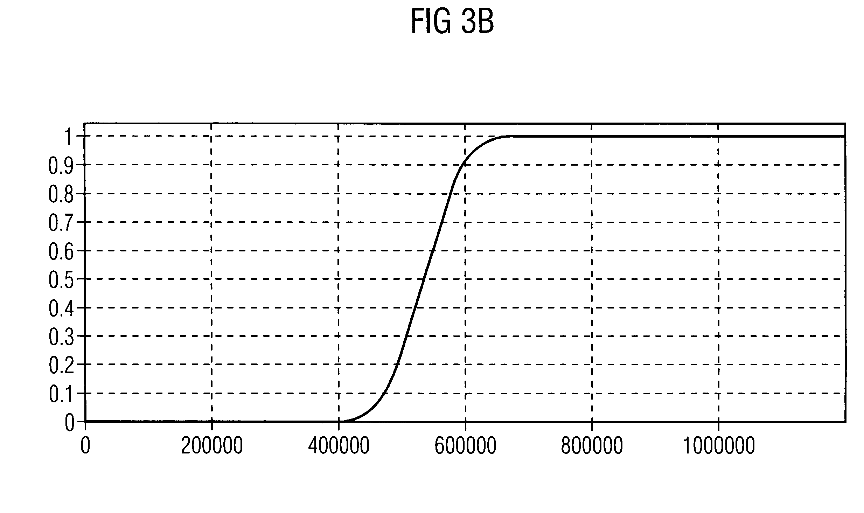

Fig. 3A zeigt eine Spezifikation von 150 Zufallsvariablen bzw. Einzelrisiken für ein erstes Berechnungsbeispiel gemäß der vorliegenden Erfindung. Die Berechnungszeit beträgt dabei ca. 200 Millisekunden. Fig. 3B zeigt die gemäß dem Ausführungsbeispiel des vorliegenden erfindungsgemäßen Verfahrens berechnete Wahrscheinlichkeitsverteilung des Gesamtrisikos hinsichtlich der Zufallsvariablen bzw. Einzelrisiken der Fig. 3A.

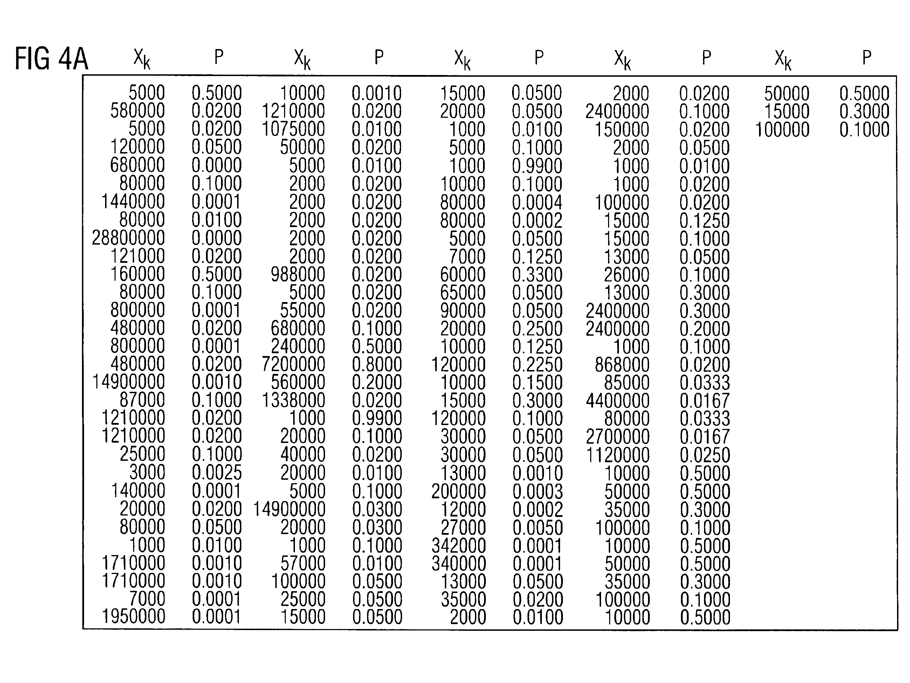

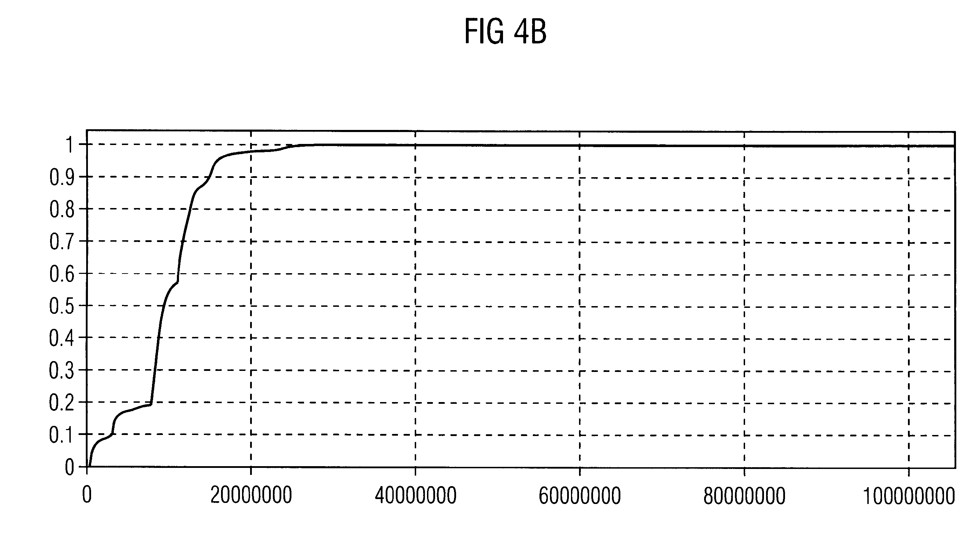

Fig. 4A zeigt eine Spezifikation von 124 Zufallsvariablen bzw. Einzelrisiken für ein zweites Berechnungsbeispiel gemäß der vorliegenden Erfindung. Die Berechnungszeit beträgt dabei ca. 390 Millisekunden. Fig. 4B zeigt die gemäß dem Ausführungsbeispiel des vorliegenden erfindungsgemäßen Verfahrens berechnete Wahrscheinlichkeitsverteilung des Gesamtrisikos hinsichtlich der Zufallsvariablen bzw. Einzelrisiken der Fig. 4A.

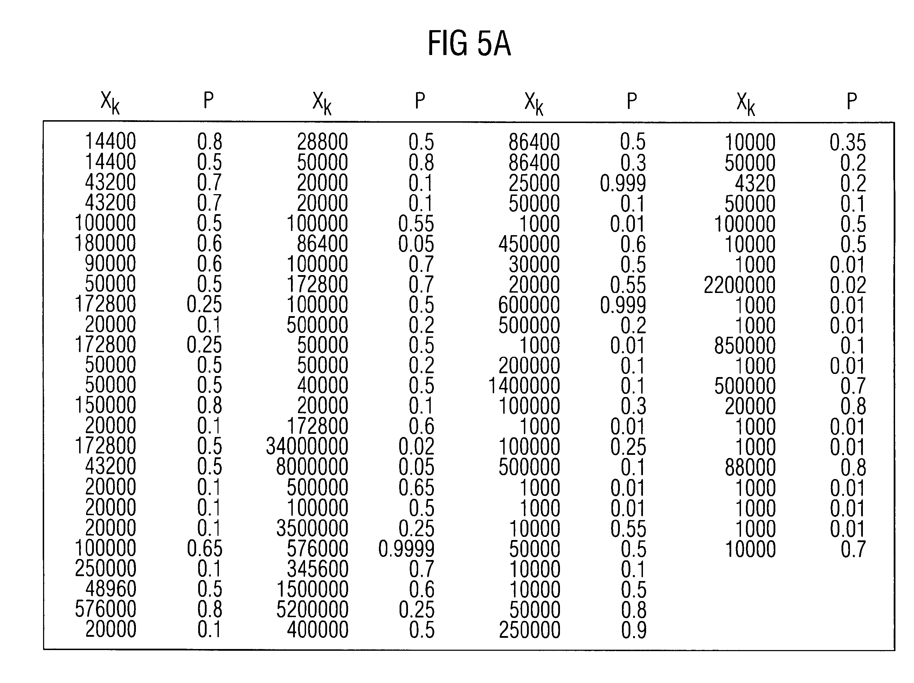

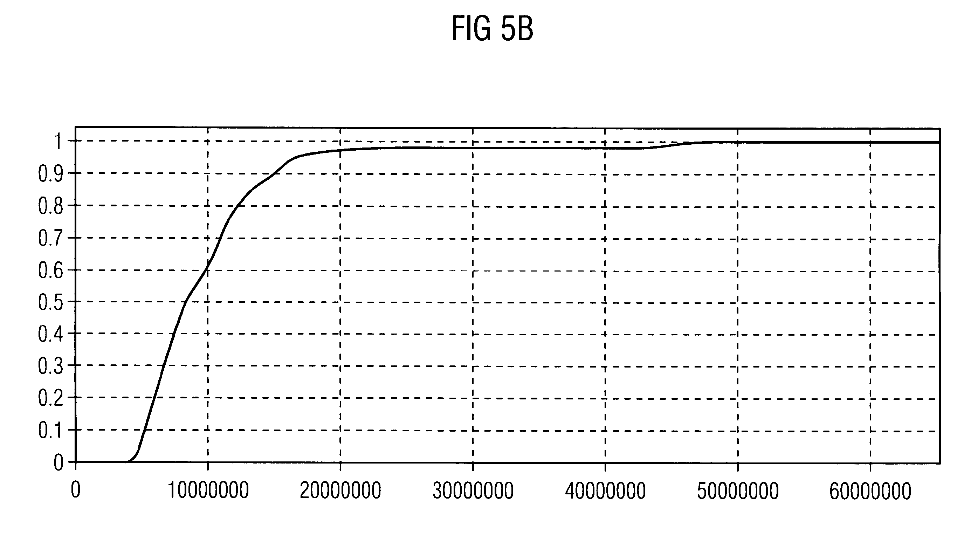

Fig. 5A zeigt eine Spezifikation von 96 Zufallsvariablen bzw. Einzelrisiken für ein drittes Berechnungsbeispiel gemäß einem vorteilhaften Ausführungsbeispiel der vorliegenden Erfindung. Die Berechnungszeit beträgt dabei ca. 1912 Millisekunden. Fig. 5B zeigt die gemäß dem Ausführungsbeispiel des vorliegenden erfindungsgemäßen Verfahrens berechnete Wahrscheinlichkeitsverteilung des Gesamtrisikos hinsichtlich der Zufallsvariablen bzw. Einzelrisiken der Fig. 5A.

Wie den Figuren 3B, 4B und 5B entnommen werden kann, stellt der analytische Ansatz des vorliegenden erfindungsgemäßen Verfahrens ein exaktes Berechungsergebnis bereit. Durch das exakte Berechungsergebnis wird eine gute, glatte graphische Visualisierung und dadurch auch eine bessere und leichtere Erfassbarkeit ermöglicht. Für die Bildung von Rückstellungen können leicht die Quantile der Verteilung abgelesen werden. An einem Anstieg der Verteilungsfunktion sind diejenigen Bereiche sichtbar, in denen einzelne Risiken besonders zum Gesamtrisiko beitragen. Die erfindungsgemäße Vorrichtung kann derart ausgestaltet sein, dass die Ergebnisse der erfindungsgemäßen Berechnung für eine Visualisierung dieser Ergebnisse aufbereitet und/oder bereitgestellt werden.

Das vorliegende erfindungsgemäße Verfahren dient der Unterstützung der Betriebssicherheit hinsichtlich eines die Betriebssicherheit vermindernden Ereignisses. Dabei wird eine Menge von Einzelrisiken bereitgestellt, wobei die Einzelrisiken eine vorbestimmte Menge von Schadenshöhen bzw. Schadensparameterwerten einnehmen können und wobei die Schadenshöhen bzw. Schadensparameterwerte einen vorbestimmten Abstand zu einander haben. Anschließend wird für jede Schadenshöhe aus der Menge eine Wahrscheinlichkeit dafür ermittelt, dass ein aufgrund des die Betriebssicherheit vermindernden Ereignisses eingetretener Gesamtschaden kleiner und/oder gleich der Schadenshöhe ist.

**Patentansprüche**

1. Verfahren zur Erhöhung einer Betriebssicherheit eines Systems hinsichtlich eines die Betriebssicherheit beeinträchtigenden Ereignisses, bei dem:

      - eine Menge von Einzelrisiken die eine vorbestimmte Menge von Schadenshöhen einnehmen, bereitgestellt werden, wobei die Schadenshöhen einen vorbestimmten Abstand zueinander aufweisen ; und bei dem
      - für jede Schadenshöhe der vorbestimmten Menge eine Wahrscheinlichkeit dafür berechnet wird, dass ein aufgrund des die Betriebssicherheit beeinträchtigenden Ereignisses eingetretener Gesamtschaden kleiner oder gleich der Schadenshöhe ist.

2. Verfahren nach Anspruch 1, wobei zur Berechnung der Wahrscheinlichkeit eine Wahrscheinlichkeitsverteilung einer Summe der Einzelrisiken ermittelt wird.

3. Verfahren nach Anspruch 2, wobei die Wahrscheinlichkeitsverteilung der Summe der Einzelrisiken über alle Einzelrisiken berechnet wird.

4. Verfahren nach Anspruch 1 oder 2, wobei eine erste Wahrscheinlichkeitsverteilung einer ersten Summe der Einzelrisiken über die Einzelrisiken bis zu einem aktuellen Einzelrisiko basierend auf einer zweiten Summe der Einzelrisiken bis zu einem Einzelrisiko vor dem aktuellen Einzelrisiko berechnet wird.

5. Verfahren nach Anspruch 4, wobei zur Berechnung der ersten Wahrscheinlichkeitsverteilung:

- eine Menge von Datenfeldern für alle positiven Werte des aktuellen Einzelrisikos bereitgestellt wird, wobei jedes Datenfeld einem positiven Wert des aktuellen Einzelrisikos entspricht und eine Dimension V/M aufweist, wobei M der vorbestimmte Abstand und V ein Ergebnis einer Summe von maximalen Werten aller Einzelrisikos ist.

6. Verfahren nach Anspruch 5, wobei für jeden Eintrag eines Datenfeldes, die einem positiven Wert des aktuellen Einzelrisikos entspricht, eine Rechtsverschiebung durchgeführt wird.

7. Verfahren nach Anspruch 6, wobei die Rechtsverschiebung um $x_{m+1,i}/M$ durchgeführt wird, wobei $x_{m+1,i}$ der positive Wert des aktuellen Einzelrisikos ist.

8. Verfahren nach Anspruch 6 oder 7, wobei dem verschobenen Eintrag eine erste Wahrscheinlichkeit dafür, dass die zweite Summe den positiven Wert des aktuellen Einzelrisikos als Ergebnis aufweist, zugewiesen wird.

9. Verfahren nach einem der Ansprüche 6 bis 8, wobei, wenn das aktuelle Einzelrisiko einen Wert Null aufweist, die erste Wahrscheinlichkeitsverteilung mit einer zweiten Wahrscheinlichkeit dafür, dass das aktuelle Einzelrisiko den Wert Null aufweist, multipliziert wird.

10. Verfahren nach einem der Ansprüche 5 bis 9, wobei Datenfelder aus der Menge von Datenfeldern für alle positiven Werte des aktuellen Einzelrisikos summiert werden.

11. Verfahren nach einem der vorstehenden Ansprüche 1-10, wobei zum Ermitteln der Wahrscheinlichkeit eine kumulative Dichte hinsichtlich jeder Schadenshöhe der vorbestimmten Menge von Schadenshöhen berechnet wird.

12. Verfahren nach einem der vorstehenden Ansprüche 1-11, wobei der Abstand als der maximale Abstand zwischen den Schadenshöhen der vorbestimmten Menge von Schadenshöhen bestimmt wird.

13. Vorrichtung zur Erhöhung der Betriebssicherheit hinsichtlich eines die Betriebssicherheit eines Systems beeinträchtigenden Ereignisses mit:

- einem Speicher (21) zum Bereitstellen einer Menge von Einzelrisiken, die eine vorbestimmte Menge von Schadenshöhen einnehmen, wobei die Schadenshöhen einen vorbestimmten Abstand zueinander aufweisen; und mit
- einer Berechnungseinheit (22), die für jede Schadenshöhe der vorbestimmten Menge von Schadenshöhen eine Wahrscheinlichkeit dafür, dass ein aufgrund des die Betriebssicherheit beeinträchtigenden Ereignisses eingetretener Gesamtschaden kleiner oder gleich der Schadenshöhe ist, berechnet.

14. Computerprogramm, das eine Kodierung aufweist, die derart ausgestaltet ist, dass Schritte des Verfahrens nach einem der Ansprüche 1 bis 12 ausführbar sind.

15. Computerprogramm nach Anspruch 14, wobei das Computerprogramm auf einem Datenträger gespeichert ist.

16. Datenträger, der ein Computerprogramm nach Anspruch 15 speichert.

# FIG 1

# FIG 2

FIG 3A

| $X_k$ | P | $X_k$ | P | $X_k$ | P | $X_k$ | P | $X_k$ | P |
|---|---|---|---|---|---|---|---|---|---|
| 1000 | 0.05 | 4000 | 0.05 | 7000 | 0.05 | 10000 | 0.05 | 13000 | 0.05 |
| 1000 | 0.1 | 4000 | 0.1 | 7000 | 0.1 | 10000 | 0.1 | 13000 | 0.1 |
| 1000 | 0.2 | 4000 | 0.2 | 7000 | 0.2 | 10000 | 0.2 | 13000 | 0.2 |
| 1000 | 0.3 | 4000 | 0.3 | 7000 | 0.3 | 10000 | 0.3 | 13000 | 0.3 |
| 1000 | 0.4 | 4000 | 0.4 | 7000 | 0.4 | 10000 | 0.4 | 13000 | 0.4 |
| 1000 | 0.5 | 4000 | 0.5 | 7000 | 0.5 | 10000 | 0.5 | 13000 | 0.5 |
| 1000 | 0.6 | 4000 | 0.6 | 7000 | 0.6 | 10000 | 0.6 | 13000 | 0.6 |
| 1000 | 0.7 | 4000 | 0.7 | 7000 | 0.7 | 10000 | 0.7 | 13000 | 0.7 |
| 1000 | 0.8 | 4000 | 0.8 | 7000 | 0.8 | 10000 | 0.8 | 13000 | 0.8 |
| 1000 | 0.9 | 4000 | 0.9 | 7000 | 0.9 | 10000 | 0.9 | 13000 | 0.9 |
| 2000 | 0.05 | 5000 | 0.05 | 8000 | 0.05 | 11000 | 0.05 | 14000 | 0.05 |
| 2000 | 0.1 | 5000 | 0.1 | 8000 | 0.1 | 11000 | 0.1 | 14000 | 0.1 |
| 2000 | 0.2 | 5000 | 0.2 | 8000 | 0.2 | 11000 | 0.2 | 14000 | 0.2 |
| 2000 | 0.3 | 5000 | 0.3 | 8000 | 0.3 | 11000 | 0.3 | 14000 | 0.3 |
| 2000 | 0.4 | 5000 | 0.4 | 8000 | 0.4 | 11000 | 0.4 | 14000 | 0.4 |
| 2000 | 0.5 | 5000 | 0.5 | 8000 | 0.5 | 11000 | 0.5 | 14000 | 0.5 |
| 2000 | 0.6 | 5000 | 0.6 | 8000 | 0.6 | 11000 | 0.6 | 14000 | 0.6 |
| 2000 | 0.7 | 5000 | 0.7 | 8000 | 0.7 | 11000 | 0.7 | 14000 | 0.7 |
| 2000 | 0.8 | 5000 | 0.8 | 8000 | 0.8 | 11000 | 0.8 | 14000 | 0.8 |
| 2000 | 0.9 | 5000 | 0.9 | 8000 | 0.9 | 11000 | 0.9 | 14000 | 0.9 |
| 3000 | 0.05 | 6000 | 0.05 | 9000 | 0.05 | 12000 | 0.05 | 15000 | 0.05 |
| 3000 | 0.1 | 6000 | 0.1 | 9000 | 0.1 | 12000 | 0.1 | 15000 | 0.1 |
| 3000 | 0.2 | 6000 | 0.2 | 9000 | 0.2 | 12000 | 0.2 | 15000 | 0.2 |
| 3000 | 0.3 | 6000 | 0.3 | 9000 | 0.3 | 12000 | 0.3 | 15000 | 0.3 |
| 3000 | 0.4 | 6000 | 0.4 | 9000 | 0.4 | 12000 | 0.4 | 15000 | 0.4 |
| 3000 | 0.5 | 6000 | 0.5 | 9000 | 0.5 | 12000 | 0.5 | 15000 | 0.5 |
| 3000 | 0.6 | 6000 | 0.6 | 9000 | 0.6 | 12000 | 0.6 | 15000 | 0.6 |
| 3000 | 0.7 | 6000 | 0.7 | 9000 | 0.7 | 12000 | 0.7 | 15000 | 0.7 |
| 3000 | 0.8 | 6000 | 0.8 | 9000 | 0.8 | 12000 | 0.8 | 15000 | 0.8 |
| 3000 | 0.9 | 6000 | 0.9 | 9000 | 0.9 | 12000 | 0.9 | 15000 | 0.9 |

EP 2 124 183 A2

## FIG 3B

# FIG 4A

| $X_k$ | P | $X_k$ | P | $X_k$ | P | $X_k$ | P | $X_k$ | P |
|---|---|---|---|---|---|---|---|---|---|
| 5000 | 0.5000 | 10000 | 0.0010 | 15000 | 0.0500 | 2000 | 0.0200 | 50000 | 0.5000 |
| 580000 | 0.0200 | 1210000 | 0.0200 | 20000 | 0.0500 | 2400000 | 0.1000 | 15000 | 0.3000 |
| 5000 | 0.0200 | 1075000 | 0.0100 | 1000 | 0.0100 | 150000 | 0.0200 | 100000 | 0.1000 |
| 120000 | 0.0500 | 50000 | 0.0200 | 5000 | 0.1000 | 2000 | 0.0500 | | |
| 680000 | 0.0000 | 5000 | 0.0100 | 1000 | 0.9900 | 1000 | 0.0100 | | |
| 80000 | 0.1000 | 2000 | 0.0200 | 10000 | 0.1000 | 1000 | 0.0200 | | |
| 1440000 | 0.0001 | 2000 | 0.0200 | 80000 | 0.0004 | 100000 | 0.0200 | | |
| 80000 | 0.0100 | 2000 | 0.0200 | 80000 | 0.0002 | 15000 | 0.1250 | | |
| 28800000 | 0.0000 | 2000 | 0.0200 | 5000 | 0.0500 | 15000 | 0.1000 | | |
| 121000 | 0.0200 | 2000 | 0.0200 | 7000 | 0.1250 | 13000 | 0.0500 | | |
| 160000 | 0.5000 | 988000 | 0.0200 | 60000 | 0.3300 | 26000 | 0.1000 | | |
| 80000 | 0.1000 | 5000 | 0.0200 | 65000 | 0.0500 | 13000 | 0.3000 | | |
| 800000 | 0.0001 | 55000 | 0.0200 | 90000 | 0.0500 | 2400000 | 0.3000 | | |
| 480000 | 0.0200 | 680000 | 0.1000 | 20000 | 0.2500 | 2400000 | 0.2000 | | |
| 800000 | 0.0001 | 240000 | 0.5000 | 10000 | 0.1250 | 1000 | 0.1000 | | |
| 480000 | 0.0200 | 7200000 | 0.8000 | 120000 | 0.2250 | 868000 | 0.0200 | | |
| 14900000 | 0.0010 | 560000 | 0.2000 | 10000 | 0.1500 | 85000 | 0.0333 | | |
| 87000 | 0.1000 | 1338000 | 0.0200 | 15000 | 0.3000 | 4400000 | 0.0167 | | |
| 1210000 | 0.0200 | 1000 | 0.9900 | 120000 | 0.1000 | 80000 | 0.0333 | | |
| 1210000 | 0.0200 | 20000 | 0.1000 | 30000 | 0.0500 | 2700000 | 0.0167 | | |
| 25000 | 0.1000 | 40000 | 0.0200 | 30000 | 0.0500 | 1120000 | 0.0250 | | |
| 3000 | 0.0025 | 20000 | 0.0100 | 13000 | 0.0010 | 10000 | 0.5000 | | |
| 140000 | 0.0001 | 5000 | 0.1000 | 200000 | 0.0003 | 50000 | 0.5000 | | |
| 20000 | 0.0200 | 14900000 | 0.0300 | 12000 | 0.0002 | 35000 | 0.3000 | | |
| 80000 | 0.0500 | 20000 | 0.0300 | 27000 | 0.0050 | 100000 | 0.1000 | | |
| 1000 | 0.0100 | 1000 | 0.1000 | 342000 | 0.0001 | 10000 | 0.5000 | | |
| 1710000 | 0.0010 | 57000 | 0.0100 | 340000 | 0.0001 | 50000 | 0.5000 | | |
| 1710000 | 0.0010 | 100000 | 0.0500 | 13000 | 0.0500 | 35000 | 0.3000 | | |
| 7000 | 0.0001 | 25000 | 0.0500 | 35000 | 0.0200 | 100000 | 0.1000 | | |
| 1950000 | 0.0001 | 15000 | 0.0500 | 2000 | 0.0100 | 10000 | 0.5000 | | |

EP 2 124 183 A2

FIG 4B

EP 2 124 183 A2

# FIG 5A

| $X_k$ | P | $X_k$ | P | $X_k$ | P | $X_k$ | P |
|---|---|---|---|---|---|---|---|
| 14400 | 0.8 | 28800 | 0.5 | 86400 | 0.5 | 10000 | 0.35 |
| 14400 | 0.5 | 50000 | 0.8 | 86400 | 0.3 | 50000 | 0.2 |
| 43200 | 0.7 | 20000 | 0.1 | 25000 | 0.999 | 4320 | 0.2 |
| 43200 | 0.7 | 20000 | 0.1 | 50000 | 0.1 | 50000 | 0.1 |
| 100000 | 0.5 | 100000 | 0.55 | 1000 | 0.01 | 100000 | 0.5 |
| 180000 | 0.6 | 86400 | 0.05 | 450000 | 0.6 | 10000 | 0.5 |
| 90000 | 0.6 | 100000 | 0.7 | 30000 | 0.5 | 1000 | 0.01 |
| 50000 | 0.5 | 172800 | 0.7 | 20000 | 0.55 | 2200000 | 0.02 |
| 172800 | 0.25 | 100000 | 0.5 | 600000 | 0.999 | 1000 | 0.01 |
| 20000 | 0.1 | 500000 | 0.2 | 500000 | 0.2 | 1000 | 0.01 |
| 172800 | 0.25 | 50000 | 0.5 | 1000 | 0.01 | 850000 | 0.1 |
| 50000 | 0.5 | 50000 | 0.2 | 200000 | 0.1 | 1000 | 0.01 |
| 50000 | 0.5 | 40000 | 0.5 | 1400000 | 0.1 | 500000 | 0.7 |
| 150000 | 0.8 | 20000 | 0.1 | 100000 | 0.3 | 20000 | 0.8 |
| 20000 | 0.1 | 172800 | 0.6 | 1000 | 0.01 | 1000 | 0.01 |
| 172800 | 0.5 | 34000000 | 0.02 | 100000 | 0.25 | 1000 | 0.01 |
| 43200 | 0.5 | 8000000 | 0.05 | 500000 | 0.1 | 88000 | 0.8 |
| 20000 | 0.1 | 500000 | 0.65 | 1000 | 0.01 | 1000 | 0.01 |
| 20000 | 0.1 | 100000 | 0.5 | 1000 | 0.01 | 1000 | 0.01 |
| 20000 | 0.1 | 3500000 | 0.25 | 10000 | 0.55 | 1000 | 0.01 |
| 100000 | 0.65 | 576000 | 0.9999 | 50000 | 0.5 | 10000 | 0.7 |
| 250000 | 0.1 | 345600 | 0.7 | 10000 | 0.1 | | |
| 48960 | 0.5 | 1500000 | 0.6 | 10000 | 0.5 | | |
| 576000 | 0.8 | 5200000 | 0.25 | 50000 | 0.8 | | |
| 20000 | 0.1 | 400000 | 0.5 | 250000 | 0.9 | | |

EP 2 124 183 A2

FIG 5B